# EUROPEAN PATENT APPLICATION

(11) **EP 4 528 184 A1**
(43) Date of publication of application: **26.03.2025**
(21) Application number: 22942795.0
(22) Date of filing: 27.12.2022
(51) Int. Cl.: F25B 47/02, F24F 11/41, F24F 11/64, G06N 20/00

(54) **PREDICTION DEVICE, REFRIGERATION SYSTEM, PREDICTION METHOD, PREDICTION PROGRAM**

(30) Priority: 20.05.2022 JP 2022082891
(71) Applicant: DAIKIN INDUSTRIES, LTD., Osaka-shi, Osaka 530-0001 (JP)
(72) Inventor: BETTO, Jo, Osaka-shi, Osaka 530-0001 (JP); ISHITSUKA, Naoki, Osaka-shi, Osaka 530-0001 (JP); HASHIMOTO, Takuma, Osaka-shi, Osaka 530-0001 (JP)
(74) Representative: Hoffmann Eitle
(86) International application number: PCT/JP2022/048358
(87) International publication number: WO 2023/223594

(57) **Abstract**

A defrosting operation can be started at a timing corresponding to frost formation. A prediction apparatus is for outputting information for controlling a start timing of a defrosting operation, in a case where the defrosting operation is started on a heat exchanger functioning as a heat absorber, the defrosting operation being performed by a refrigerator including a refrigerant circuit in which a refrigerant circulates, the refrigerant circuit including a compressor, a radiator, an expansion valve, and the heat absorber that are annularly connected, the prediction apparatus including a control unit configured to input operation data of a current time in the refrigerator into a learned model, in a case where the learned model is generated based on learning data obtained by classifying a history of past operation data of the refrigerator into a plurality of groups by clustering and assigning, to each of the plurality of groups, data indicating presence or absence of frost formation on the heat exchanger, and output information indicating presence or absence of frost formation on the heat exchanger predicted by the learned model.

## Description

### Technical Field

The present disclosure relates to a prediction apparatus, a refrigeration system, a prediction method, and a prediction program.

### Background Art

As an example of a defrosting process in a refrigeration cycle apparatus, for example, Patent Document 1 discloses that the start timing of the defrosting operation is determined using reinforcement learning.

### Citation List

### Patent Document

[Patent document 1] WO 2021/176689

### Summary of Invention

### Technical Problem

However, in the case of a defrosting process using reinforcement learning as described above, learning to improve the accuracy of determining the start timing takes time and requires a large amount of data.

It is an object of the present disclosure to enable a defrosting operation to be started at an appropriate time based on frost formation.

### Solution to Problem

A first aspect of the present disclosure is a prediction apparatus for outputting information for controlling a start timing of a defrosting operation, in a case where the defrosting operation is started on a heat exchanger functioning as a heat absorber, the defrosting operation being performed by a refrigerator including a refrigerant circuit in which a refrigerant circulates, the refrigerant circuit including a compressor, a radiator, an expansion valve, and the heat absorber that are annularly connected, the prediction apparatus including:
a control unit configured to
input operation data of a current time in the refrigerator into a learned model, in a case where the learned model is generated based on learning data obtained by classifying a history of past operation data of the refrigerator into a plurality of groups by clustering and assigning, to each of the plurality of groups, data indicating presence or absence of frost formation on the heat exchanger, and
output information indicating presence or absence of frost formation on the heat exchanger predicted by the learned model.

According to a first aspect of the present disclosure, a defrosting operation can be started at a timing corresponding to frost formation.

Further, a second aspect of the present disclosure is the prediction apparatus according to the first aspect, wherein the operation data includes data indicating a state of the refrigerant circuit.

Further, a third aspect of the present disclosure is the prediction apparatus according to the second aspect, wherein the operation data includes data indicating a state of an environment.

Further, a fourth aspect of the present disclosure is the prediction apparatus according to the third aspect, wherein
the data indicating the state of the refrigerant circuit includes any one of a frequency of the compressor, pressure data on a low pressure side of the compressor, opening data of the expansion valve, heating capacity data, and evaporation temperature data, and
the data indicating the state of the environment includes environmental humidity data.

Further, a fifth aspect of the present disclosure is the prediction apparatus according to any one of the first to fourth aspects, wherein the control unit outputs the information indicating the start timing of the defrosting operation as the information indicating presence or absence of frost formation on the heat exchanger when frost formation present is predicted by the learned model.

Further, a sixth aspect of the present disclosure is the prediction apparatus according to any one of the first to fifth aspects, wherein the control unit generates the learning data by classifying the history of the past operation data of the refrigerator into the plurality of groups by clustering and assigning, to each of the plurality of groups, the data indicating the presence or absence of frost formation on the heat exchanger.

Further, a seventh aspect of the present disclosure is the prediction apparatus according to any one of the first to sixth aspects, wherein the control unit inputs, into a learning model, the history of the past operation data classified into the plurality of groups of the learning data, thereby learning the learning model so that output data output from the learning model approaches the data that is assigned to each of the plurality of groups and that indicates presence or absence of frost formation on the heat exchanger, thereby generating the learned model.

Further, an eighth aspect of the present disclosure is a refrigeration system including:
the refrigerator that controls the start timing of the defrosting operation by using the information indicating presence or absence of frost formation on the heat exchanger output by the prediction apparatus according to any one of the first to seventh aspects.

Further, a ninth aspect of the present disclosure is the refrigeration system according to the eighth aspect, wherein the prediction apparatus is implemented in any one of a plurality of units included in the refrigerator.

Further, a tenth aspect of the present disclosure is the refrigeration system according to the eighth aspect, further including:
a server apparatus connected to the refrigerator via a network, wherein
the prediction apparatus is implemented in the server apparatus.

Further, a eleventh aspect of the present disclosure is a prediction method of a prediction apparatus for outputting information for controlling a start timing of a defrosting operation, in a case where the defrosting operation is started on a heat exchanger functioning as a heat absorber, the defrosting operation being performed by a refrigerator including a refrigerant circuit in which a refrigerant circulates, the refrigerant circuit including a compressor, a radiator, an expansion valve, and the heat absorber that are annularly connected, the prediction method including:
a procedure of inputting operation data of a current time in the refrigerator into a learned model, in a case where the learned model is generated based on learning data obtained by classifying a history of past operation data of the refrigerator into a plurality of groups by clustering and assigning, to each of the plurality of groups, data indicating presence or absence of frost formation on the heat exchanger; and
a procedure of outputting information indicating presence or absence of frost formation on the heat exchanger predicted by the learned model.

Further, a twelfth aspect of the present disclosure is a prediction program that causes a control unit included in a prediction apparatus to execute procedures, the prediction apparatus being for outputting information for controlling a start timing of a defrosting operation, in a case where the defrosting operation is started on a heat exchanger functioning as a heat absorber, the defrosting operation being performed by a refrigerator including a refrigerant circuit in which a refrigerant circulates, the refrigerant circuit including a compressor, a radiator, an expansion valve, and the heat absorber that are annularly connected, the procedures including:
a procedure of inputting operation data of a current time in the refrigerator into a learned model, in a case where the learned model is generated based on learning data obtained by classifying a history of past operation data of the refrigerator into a plurality of groups by clustering and assigning, to each of the plurality of groups, data indicating presence or absence of frost formation on the heat exchanger; and
a procedure of outputting information indicating presence or absence of frost formation on the heat exchanger predicted by the learned model.

### Brief Description of Drawings

[FIG. 1A] FIG. 1A is a diagram illustrating an example of a system configuration of a refrigeration system in a learning phase.
[FIG. 1B] FIG. 1B is a diagram illustrating an example of a system configuration of a system involved in operation data collection processing in a refrigeration system in a learning phase.
[FIG. 2] FIG. 2 is a diagram illustrating an example of a hardware configuration of a learning apparatus.
[FIG. 3] FIG. 3 is a diagram illustrating an example of a functional configuration of a system involved in learning processing in a refrigeration system in a learning phase.
[FIG. 4] FIG. 4 is a diagram illustrating an example of operation data and observation data.
[FIG. 5] FIG. 5 is a diagram illustrating a specific example of the processing of the clustering analysis unit.
[FIG. 6] FIG. 6 is a diagram illustrating a specific example of the processing of the labeling unit.
[FIG. 7] FIG. 7 is a diagram illustrating a specific example of the processing of the learning unit.
[FIG. 8] FIG. 8 is a flowchart illustrating the flow of the learning processing.
[FIG. 9] FIG. 9 is a diagram illustrating an example of the system configuration of the refrigeration system in the prediction phase.
[FIG. 10] FIG. 10 is a diagram illustrating an example of a hardware configuration of a server apparatus.
[FIG. 11] FIG. 11 is a diagram illustrating an example of a functional configuration of a system involved in the prediction processing in the refrigeration system in the prediction phase.
[FIG. 12] FIG. 12 is a flowchart illustrating the flow of the prediction processing.
[FIG. 13] FIG. 13 is a diagram illustrating a specific example of the defrosting processing.

### Description of Embodiments

Hereinafter, each embodiment will be described with reference to the accompanying drawings. In the present specification and the drawings, elements having substantially the same functional configuration are denoted by the same reference numerals, thereby omitting redundant explanation.

### [First embodiment]

### <System configuration of refrigerating system in learning phase>

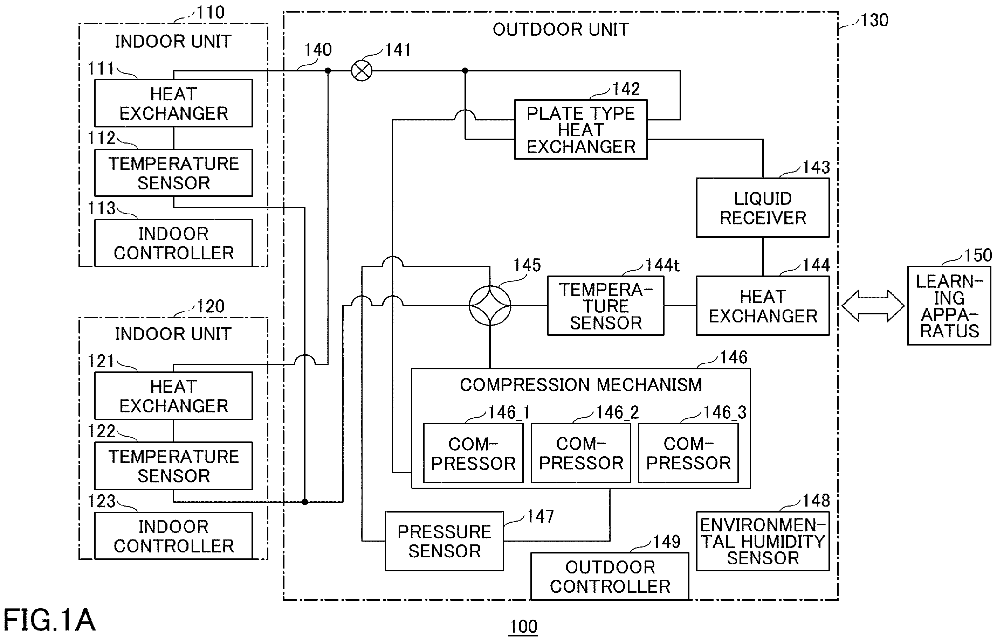

First, the system configuration in the learning phase of the refrigerating system according to the first embodiment will be described. FIG. 1A is a diagram illustrating an example of the system configuration of the refrigerating system in the learning phase.

As illustrated in FIG. 1A, the refrigerating system 100 according to the first embodiment includes a refrigerator (refrigerator constituted of a plurality of units which are an indoor unit 110, an indoor unit 120 and an outdoor unit 130) and a learning apparatus 150 in the learning phase. In the present embodiment, the refrigerator includes two indoor units as an example, but the number of indoor units may be one or three or more.

The refrigerator includes a refrigerant circuit 140 in which a refrigerant circulates, and a compressor, a radiator, an expansion valve, and a heat absorber are annularly connected along the refrigerant circuit 140 to implement indoor air conditioning.

In the learning phase, the refrigerating system 100 collects operation data correlated with frost formation on the outdoor unit 130 (specifically, the heat exchanger 144) during operation of the refrigerator. Therefore, in the system configuration illustrated in FIG. 1A, the apparatus necessary for collecting operation data correlated with frost formation on the heat exchanger 144 of the outdoor unit 130 is described, and the apparatus necessary for operation of the refrigerator itself is described in a simplified manner.

The outdoor unit 130 includes an electronic expansion valve 141, a plate type heat exchanger 142, a liquid receiver 143, a heat exchanger 144, a flow path switching mechanism 145, a compression mechanism 146, a pressure sensor 147, an environmental humidity sensor 148, and an outdoor controller 149.

The electronic expansion valve 141 adjusts the amount of the refrigerant supplied to the indoor units 110, 120 between the heat exchangers 111, 121 when functioning as a heat absorber and the heat exchanger 144 when functioning as a radiator (that is, during the cooling or a cooling operation). Alternatively, the electronic expansion valve 141 adjusts the amount of the refrigerant passing between the heat exchangers 111 and 121 when functioning as a radiator and the heat exchanger 144 when functioning as a heat absorber (that is, during heating or a heating operation). The plate type heat exchanger 142 cools the refrigerant. The liquid receiver 143 stores the refrigerant.

The heat exchanger 144 is an air heat exchanger and exchanges heat between outdoor air conveyed by an outdoor fan (not illustrated) and the refrigerant.

The temperature sensor 144t measures the evaporation temperature of the refrigerant in the heat exchanger 144 when functioning as a heat absorber.

The flow path switching mechanism 145 switches the flow path of the refrigerant. The following are examples.
- In the case of cooling or a cooling operation, the flow path switching mechanism 145 takes in the refrigerant evaporated (absorbed heat) in the heat exchanger 111 of the indoor unit 110 and the heat exchanger 121 of the indoor unit 120, into the compression mechanism 146. The flow path switching mechanism 145 sends the refrigerant compressed in the compression mechanism 146 to the heat exchanger 144. As a result, the refrigerant dissipates heat in the heat exchanger 144, and after the supply amount is adjusted by the electronic expansion valve 141, the refrigerant evaporates again in the heat exchanger 111 of the indoor unit 110 and the heat exchanger 121 of the indoor unit 120.
- In the case of heating or a heating operation, the flow path switching mechanism 145 sends the refrigerant compressed in the compression mechanism 146 to the indoor unit 110 and the indoor unit 120. As a result, the refrigerant dissipates heat in the heat exchanger 111 and the heat exchanger 121, and after the passing amount is adjusted by the electronic expansion valve 141, the refrigerant evaporates (absorbs heat) in the heat exchanger 144. The flow path switching mechanism 145 takes in the refrigerant evaporated (absorbed heat) in the heat exchanger 144 into the compression mechanism 146. As a result, the refrigerant is compressed again in the compression mechanism 146.
- In the defrosting operation, the flow path switching mechanism 145 operates in the same manner as in the cooling or a cooling operation. That is, the refrigerant compressed in the compression mechanism 146 radiates heat in the heat exchanger 144. As a result, the frost on the surface of the heat exchanger 144 is heated from the inside, and the heat exchanger 144 is defrosted.

The compression mechanism 146 includes a plurality of compressors (in the example of FIG. 1A, three compressors which are compressors 146_1 to 146_3) and compresses the refrigerant. The plurality of compressors are variable capacitance compressors whose frequency or rotational speed at the time of operation can be adjusted.

The pressure sensor 147 measures the pressure (low pressure side pressure) of the refrigerant at the inlet of the compression mechanism 146. The environmental humidity sensor 148 measures the humidity of the external environment.

The outdoor controller 149 controls the operation of each device provided in the outdoor unit 130. The outdoor controller 149 collects measurement data and the like from each sensor provided in the outdoor unit 130.

The indoor unit 110 is a utilization unit that performs indoor air conditioning, and includes a heat exchanger 111, a temperature sensor 112, and an indoor controller 113.

The heat exchanger 111 is an air heat exchanger, and performs heat exchange between indoor air conveyed by an indoor fan (not illustrated) and a refrigerant.

The temperature sensor 122 measures the evaporation temperature of the refrigerant in the heat exchanger 111 when functioning as a heat absorber.

The indoor controller 113 controls the operation of each device provided in the indoor unit 110. The indoor controller 113 acquires measurement data of each sensor provided in the indoor unit 110, and notifies the outdoor controller 149 of the data.

The indoor unit 120 is a utilization unit for cooling indoor air, and includes a heat exchanger 121, a temperature sensor 122, and an indoor controller 123.

The heat exchanger 121 is an air heat exchanger and exchanges heat between indoor air conveyed by an indoor fan (not illustrated) and a refrigerant.

The temperature sensor 112 measures the evaporation temperature of the refrigerant in the heat exchanger 121 when functioning as a heat absorber.

The indoor controller 123 controls the operation of each device provided in the indoor unit 120. The indoor controller 123 also acquires measurement data of each sensor provided in the indoor unit 120 and notifies the outdoor controller 149 of the data.

The learning apparatus 150 acquires operation data collected by the outdoor controller 149 during the operation of the cooler, the operation data being correlated with frost formation on the heat exchanger 144 of the outdoor unit 130. Further, the learning apparatus 150 acquires observation data indicating that frost formation on the heat exchanger 144 of the outdoor unit 130 actually occurred (or did not occur) at each time when the acquired operation data was measured. Further, the learning apparatus 150 generates a learned model by using the operation data and the observation data.

### <System configuration for a system involved in operation data collection processing>

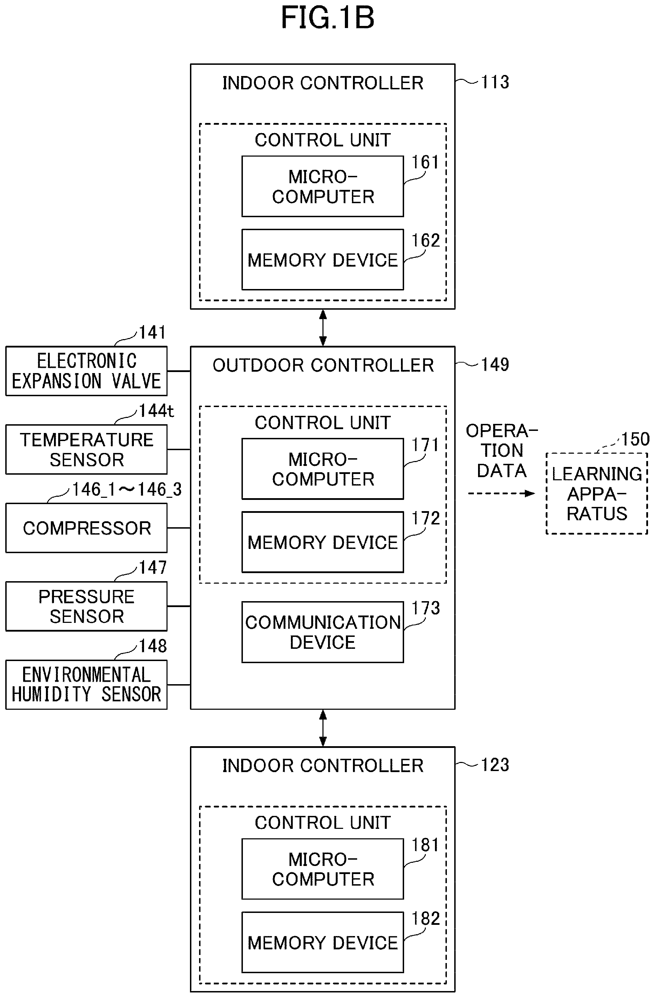

Next, in the refrigeration system 100 in the learning phase, a system configuration for a system involved in operation data collection processing for collecting operation data correlated with frost formation on the heat exchanger 144 of the outdoor unit 130 will be described. FIG. 1B is a diagram illustrating an example of a system configuration for a system involved in operation data collection processing in the refrigeration system in the learning phase.

As illustrated in FIG. 1B, the system involved in operation data collection processing includes an indoor controller 113, an outdoor controller 149, and an indoor controller 123.

The indoor controller 113 includes a microcomputer 161 mounted on a control board and a memory device 162 for storing a program for operating the microcomputer 161.

Similarly, the indoor controller 123 includes a microcomputer 181 mounted on the control board and a memory device 182 for storing a program for operating the microcomputer 181.

The outdoor controller 149 includes a microcomputer 171 mounted on the control board, a memory device 172 for storing a program for operating the microcomputer 171, and a communication device 173. During operation of the refrigerator, the outdoor controller 149 collects:
- a valve opening degree of the electronic expansion valve 141 (expansion valve opening degree data);
- a total frequency (compressor frequency data) calculated based on the total rotational speed of the compressors 146_1 to 146_3;
- a pressure of the refrigerant at the inlet of the compression mechanism 146 measured by the pressure sensor 147 (low pressure side pressure data);
- a humidity of the external environment measured by the environmental humidity sensor 148 (environmental humidity data);
- a heating capacity of the refrigerator (heating capacity data); and
- an evaporation temperature of the refrigerant in the heat exchanger 144 measured by the temperature sensor 144t (evaporation temperature data).

As a result, the outdoor controller 149 according to the present embodiment can collect, as operation data correlated with frost formation, the following data indicating the state of the refrigerant circuit 140:
- low pressure side pressure data;
- expansion valve opening data;
- compressor frequency data;
- heating capacity data; and
- evaporation temperature data,
and the following data indicating the state of the environment:
- environmental humidity data.
The collected operation data can be transmitted to the learning apparatus 150 via the communication device 173. In the present embodiment, the microcomputer of each controller of the refrigerator and the memory device may be collectively referred to as a "control unit".

### <Hardware configuration of the learning apparatus>

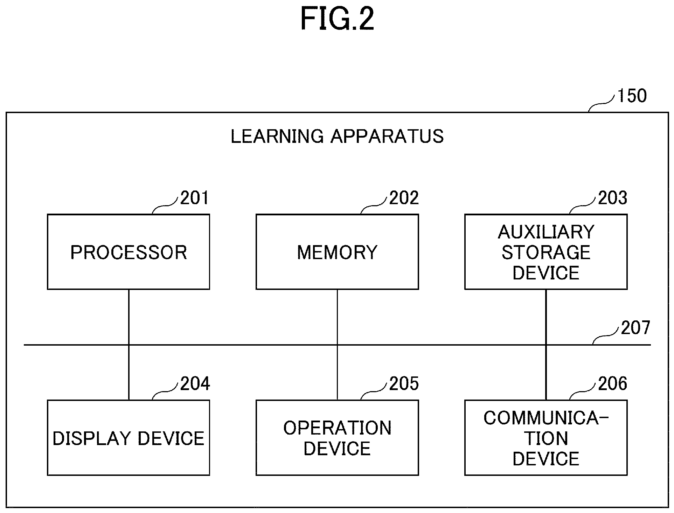

Next, the hardware configuration of the learning apparatus 150 will be described. FIG. 2 is a diagram illustrating an example of the hardware configuration of the learning apparatus.

As illustrated in FIG. 2, the learning apparatus 150 includes a processor 201, a memory 202, an auxiliary storage device 203, a display device 204, an operation device 205, and a communication device 206. The hardware of the learning apparatus 150 is connected to each other via a bus 207.

The processor 201 has various computing devices such as a CPU (Central Processing Unit) and a GPU (Graphics Processing Unit). The processor 201 reads various programs (for example, a learning program described later) into the memory 202 and executes them.

The memory 202 has main storage devices such as a ROM (Read Only Memory) and a RAM (Random Access Memory). The processor 201 and the memory 202 form what is referred to as a computer, and when the processor 201 executes various programs read into the memory 202, the computer implements various functions.

The auxiliary storage device 203 stores various programs and various kinds of data used when the various programs are executed by the processor 201.

The display device 204 is a display device for displaying the result of the internal processing of the learning apparatus 150. The operation device 205 is an input device used when a user inputs various instructions to the learning apparatus 150.

The communication device 206 is connected, for example, to the outdoor controller 149 of the refrigerator to receive operation data.

### <Functional configuration of the system related to the learning process>

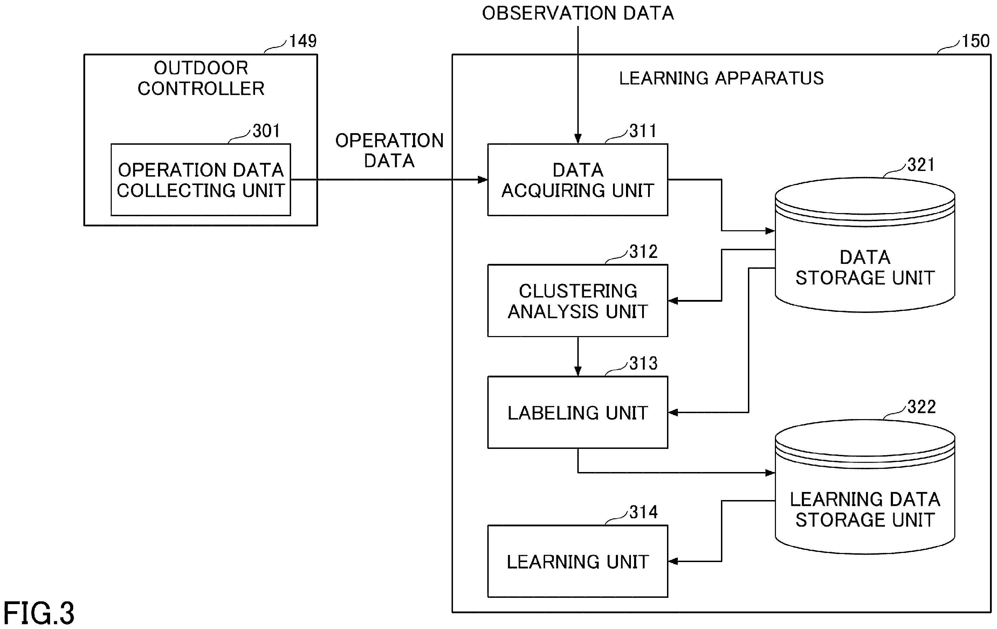

Next, in the refrigeration system 100 in the learning phase, the functional configuration of the system related to the learning process will be described. FIG. 3 is a diagram illustrating an example of the functional configuration of the system related to the learning process in the refrigeration system in the learning phase.

As described above, in the learning phase, the outdoor controller 149 functions as an operation data collecting unit 301 for collecting operation data during operation of the refrigerator and transmitting the data to the learning apparatus 150.

As described above, a learning program is installed in the learning apparatus 150, and by executing the program, the learning apparatus 150 functions as the data acquiring unit 311, the clustering analysis unit 312, the labeling unit 313, and the learning unit 314.

The data acquiring unit 311 acquires operation data transmitted from the outdoor controller 149. Specifically, the data acquiring unit 311 acquires, as operation data, the following data representing the state of the refrigerant circuit 140 at each time:
- low pressure-side pressure data;
- expansion valve opening data;
- compressor frequency data;
- heating capacity data; and
- evaporation temperature data,
and the following data indicating the state of the environment at each time:.
- environmental humidity data.

The data acquiring unit 311 acquires observation data. As described above, the observation data is data indicating the presence or absence of frost formation on the heat exchanger 144 at each time when the operation data is measured, and the result obtained by observing the presence or absence of frost formation by the observer is input as observation data.

The data acquiring unit 311 stores the acquired operation data and observation data in the data storage unit 321.

The clustering analysis unit 312 reads the operation data from the data storage unit 321 and classifies the operation data of each time into a plurality of groups by, for example, clustering analysis using the k-means method. As described above, the operation data includes six types of data of (low pressure side pressure data, expansion valve opening data, compressor frequency data, heating capacity data, evaporation temperature data, and environmental humidity data). For this reason, the clustering analysis unit 312 groups the operation data of each time that are scattered in the six-dimensional feature space so that the operation data whose distribution positions are close belong to the same group.

The clustering analysis unit 312 notifies the labeling unit 313 of the operation data of each time classified into groups.

The labeling unit 313 assigns a label to the operation data of each time classified into groups. Specifically, the labeling unit 313 reads the observation data from the data storage unit 321, and determines whether the operation data of each time classified into groups is the operation data of the time when the presence of frost formation is observed or the operation data of the time when frost formation is not observed.

The labeling unit 313 assigns a label of frost formation present to all the operation data of each time classified into the group to be processed when the operation data of each time classified into the group to be processed is the operation data of the time when the presence of frost formation is observed.

The labeling unit 313 assigns a label of no frost formation to all the operation data of each time classified into the group to be processed when the operation data of each time classified into the group to be processed is the operation data of the time when frost formation is not observed.

Further, the labeling unit 313 stores the operation data of each time with the label of frost formation present or the label of no frost formation, as learning data, in the learning data storage unit 322.

The learning unit 314 uses the learning data stored in the learning data storage unit 322 to learn the learning model and generate a learned model.

### <Specific examples of operation data and observation data>

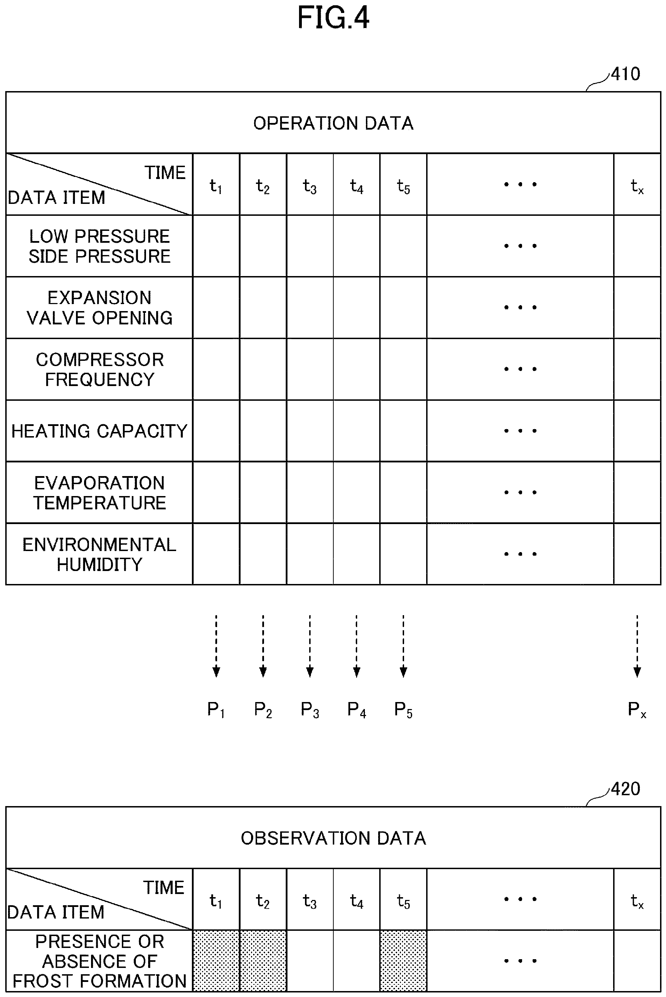

Next, specific examples of operation data and observation data acquired by the data acquiring unit 311 will be described. FIG. 4 is a diagram illustrating an example of operation data and observation data.

As illustrated in FIG. 4, the operation data 410 includes, as information items, data items (low pressure side pressure, expansion valve opening, compressor frequency, heating capacity, evaporation temperature, environmental humidity). The operation data 410 includes time (t₁, t₂, t₃, t₄, t₅ ... tₓ) as an item of information.

Operation data of each time is stored in each column of the operation data 410. For example, in a column where data item = "low pressure side pressure" intersects with time = "t₁", low pressure side pressure data at time t₁ is stored. Similarly, in a column where data item = "expansion valve opening" intersects with time = "t₁", expansion valve opening data at time t₁ is stored. Similarly, in a column where data item = "compressor frequency" intersects with time = "t₁", compressor frequency data at time t₁ is stored. Similarly, in a column where data item = "heating capacity" intersects with time = "t₁", heating capacity data at time t₁ is stored. Similarly, in a column where data item = "evaporation temperature" intersects with time = "t₁", evaporation temperature data at time t₁ is stored. Similarly, in a column where data item = "environmental humidity" intersects with time = "t₁", environmental humidity data at time t₁ is stored.

As illustrated in FIG. 4, the operation data at time = "t₁" is plotted as a point P₁ in a six-dimensional feature space.

Hereinafter, similarly, the operation data of each time (t₂, t₃, t₄, t₅, ... tₓ) are plotted as points P₂, P₃, P₄, P₅, ... and Pₓ, respectively, in a six-dimensional feature space.

Further, as illustrated in FIG. 4, the observation data 420 includes a data item (presence/absence of frost formation) as an information item. Further, the observation data 420 includes a time (t₁, t₂, t₃, t₄, t₅ ... tₓ) as an information item.

The observation data at each time is stored in each column of the observation data 420. For example, data indicating presence/absence of frost formation at time t₁ is stored in a column where data item = "presence/absence of frost formation" and time = "t₁" intersect. In the example of FIG. 4, the hatched column indicates data indicating frost formation present, and the unhatched column indicates data indicating the absence of frost formation.

### <Specific example of processing by the clustering analysis unit>

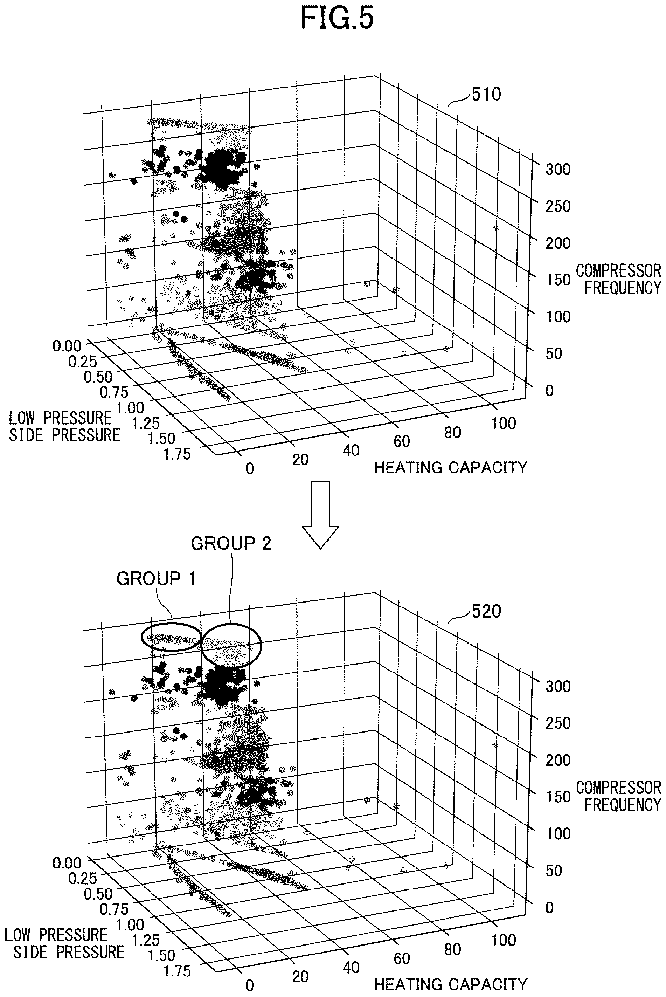

Next, a specific example of processing by the clustering analysis unit 312 will be described. FIG. 5 is a diagram illustrating a specific example of processing by the clustering analysis unit.

As described above, the clustering analysis unit 312 reads the operation data of each time from the data storage unit 321 and performs clustering analysis to classify the operation data into a plurality of groups.

In FIG. 5, the feature space 510 shows a state in which the operation data (point P₁, point P₂, point P₃, point P₄, point P₅, ... point Pₓ) of each time read from the data storage unit 321 is plotted. For convenience of explanation, a feature space 510 is illustrated as a three-dimensional feature space (low pressure side pressure data, compressor frequency data, and heating capacity data).

In the clustering analysis unit 312, the points distributed in the feature space 510 are grouped so that operation data having distribution positions close to each other belong to the same group.

FIG. 5 illustrates that in a feature space 520, group 1 and group 2 are generated as a result of grouping the points. The clustering analysis unit 312 classifies all the points distributed in the feature space 510 into one of the groups.

### <Specific example of processing by the labeling unit>

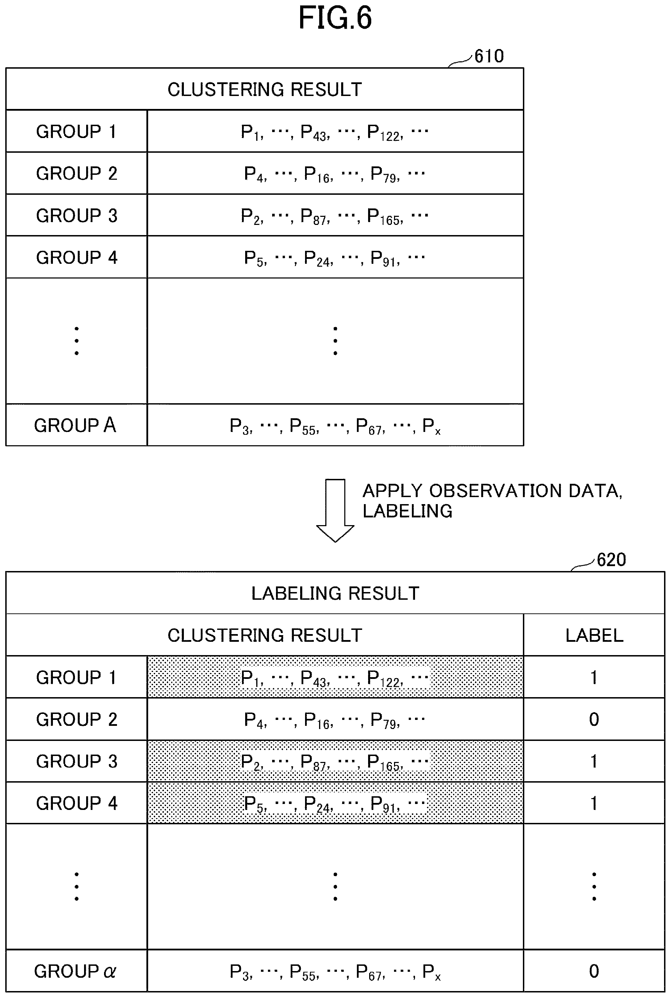

Next, a specific example of processing by the labeling unit 313 will be described. FIG. 6 is a diagram illustrating a specific example of processing by the labeling unit.

As described above, the labeling unit 313 assigns a label to the operation data of each time classified into groups. In FIG. 6, the clustering result 610 is a list of points indicating the operation data of each time classified into groups. The example in FIG. 6 shows a state in which the operation data of each time is classified into α groups from group 1 to group α.

In FIG. 6, the labeling result 620 shows a state in which a label indicating frost formation present or a label indicating no frost formation is assigned to the operation data of each time classified into groups. The example in FIG. 6 shows a state in which a label = "1" indicating frost formation present is assigned to the operation data of each time classified into group 1, group 3, and group 4, and a label = "0" indicating no frost formation is assigned to the operation data of each time classified into group 2 and group α.

In this way, by assigning labels to the operation data in units of groups generated by clustering analysis, an effect equivalent to that in which learning data is generated for the operation data of positions not plotted in the six-dimensional feature space can be obtained. As a result, the learning unit 314 can generate a learned model with high prediction accuracy with less learning data and less learning time.

### <Specific example of processing of the learning unit>

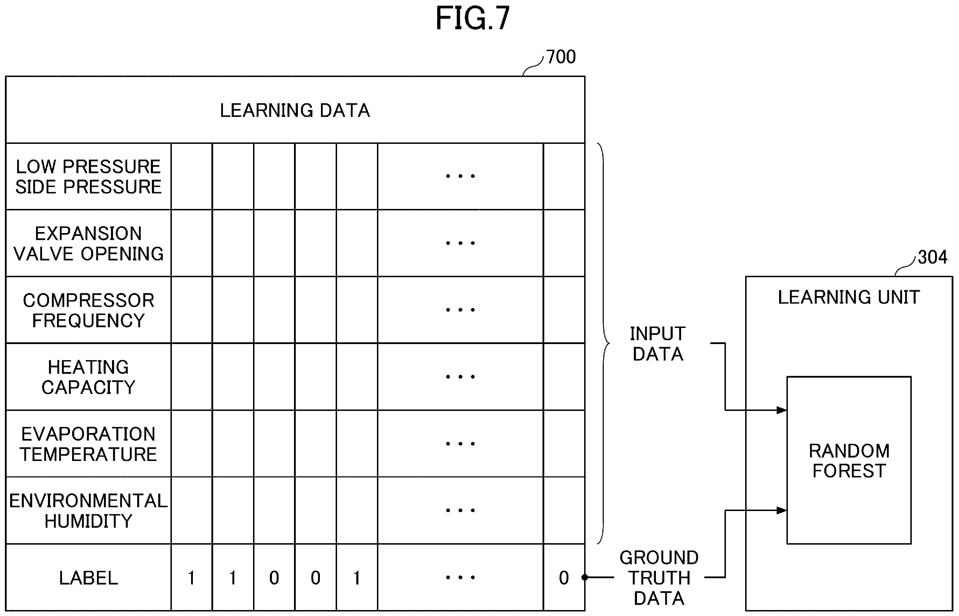

Next, a specific example of the processing of the learning unit 314 will be described. FIG. 7 is a diagram illustrating a specific example of the processing of the learning unit.

As described above, the learning unit 314 performs learning on the learning model by using the learning data stored in the learning data storage unit 322, and generates a learned model. In FIG. 7, the learning data 700 shows an example of the learning data read from the learning data storage unit 322. As illustrated in FIG. 7, the learning data 700 has labels assigned to the operation data of each time.

The learning unit 314 inputs the operation data of each time out of the learning data 700 as input data to a random forest, which is an example of a learning model. The learning unit 314 inputs the labels of each time out of the learning data 700 as ground truth data to a random forest, which is an example of a learning model. Thus, the learning unit 314 can learn about the random forest so that the output data output from the random forest approaches the ground truth data when the input data is input.

As a result, the learning unit 314 can generate a learned model in which the relationship between the operation data and the presence or absence of frost formation on the heat exchanger 144 is learned.

### <Flow of learning process>

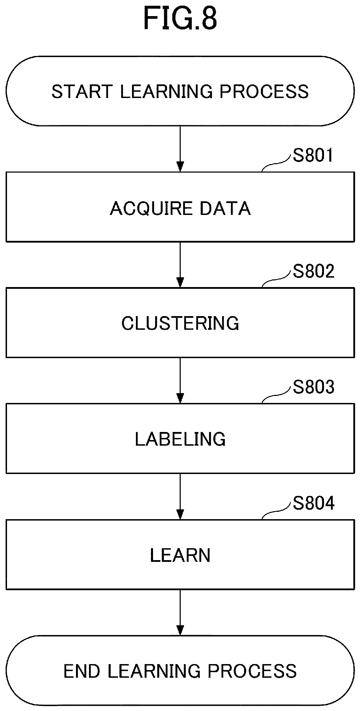

Next, the flow of the learning process by the learning apparatus 150 will be described. FIG. 8 is a flowchart illustrating the flow of the learning process.

In step S801, the learning apparatus 150 acquires operation data and observation data.

In step S802, the learning apparatus 150 performs clustering analysis on the acquired operation data and classifies the operation data of each time into a plurality of groups.

In step S803, the learning apparatus 150 assigns a label indicating frost formation present or a label indicating no frost formation to the operation data of each time classified into groups, based on the obtained observation data.

In step S804, the learning apparatus 150 performs learning on the learning model by using the operation data of each time labeled, and generates a learned model.

### <System configuration of the refrigerating system in the prediction phase>

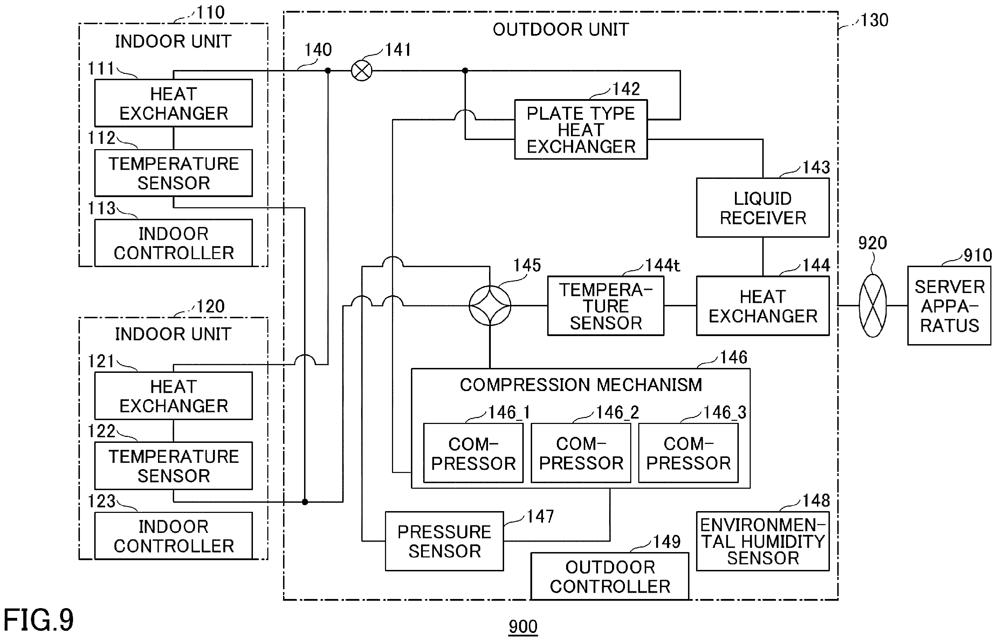

Next, the system configuration of the refrigeration system according to the first embodiment in the prediction phase will be described. FIG. 9 is a diagram illustrating an example of the system configuration of the refrigeration system in the prediction phase.

A difference from the refrigeration system 100 in the learning phase described with reference to FIG. 1A is that, in the case of a refrigeration system 900 in the prediction phase, a server apparatus 910 is connected to a refrigerator via a network 920.

The server apparatus 910 is an example of a prediction apparatus, and receives operation data from the outdoor unit 130 of the refrigerator during operation via the network 920. The server apparatus 910 predicts the presence or absence of frost formation on the heat exchanger 144 of the outdoor unit 130 based on the received operation data, and when the presence of frost formation is predicted, transmits information indicating frost formation present to the outdoor unit 130.

Thus, the configuration for predicting the presence or absence of frost formation on the heat exchanger 144 from the operation data enables the refrigerator to start a defrosting operation depending on whether frost formation has occurred.

The defrosting operation refers to the operation of each device of the refrigerator for performing the defrosting operation described above.

### <Hardware configuration of the server apparatus>

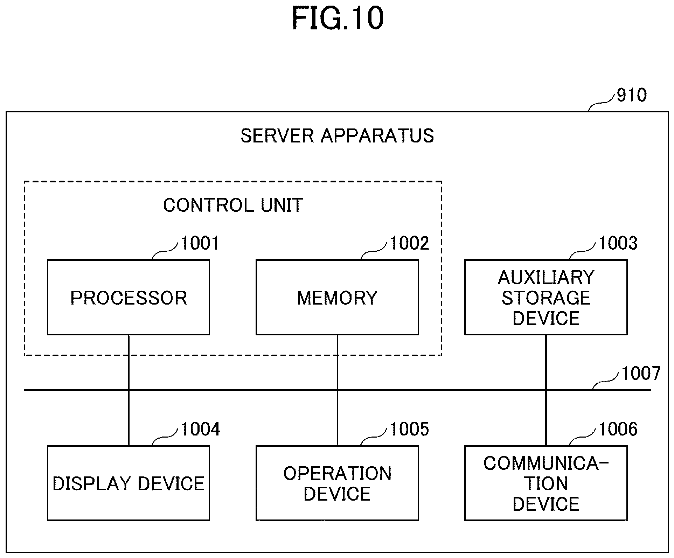

Next, the hardware configuration of a server apparatus 910 will be described. FIG. 10 is a diagram illustrating an example of the hardware configuration of the server apparatus.

As illustrated in FIG. 10, the server apparatus 910 includes a processor 1001, a memory 1002, an auxiliary storage device 1003, a display device 1004, an operation device 1005, and a communication device 1006. The respective pieces of hardware of the server apparatus 910 are connected to each other via a bus 1007.

The processor 1001 includes various computing devices such as a CPU (Central Processing Unit), a GPU (Graphics Processing Unit), and the like. The processor 1001 reads various programs (for example, a prediction program described later) into the memory 1002 and executes them.

The memory 1002 includes main memory devices such as a ROM (Read Only Memory), a RAM (Random Access Memory), and the like. The processor 1001 and the memory 1002 form what is referred to as a computer (may be referred to as a "control unit" in the present embodiment), and the processor 1001 executes various programs read into the memory 1002, whereby the computer implements various functions.

The auxiliary storage device 1003 stores various programs and various kinds of data used when the various programs are executed by the processor 1001.

The display device 1004 is a display device for displaying the result of the internal processing of the server apparatus 910. The operation device 1005 is an input device used when a user inputs various instructions to the server apparatus 910.

The communication device 1006 communicates with, for example, the outdoor controller 149 of the refrigerator via the network 920.

### <Functional configuration of a system related to prediction processing>

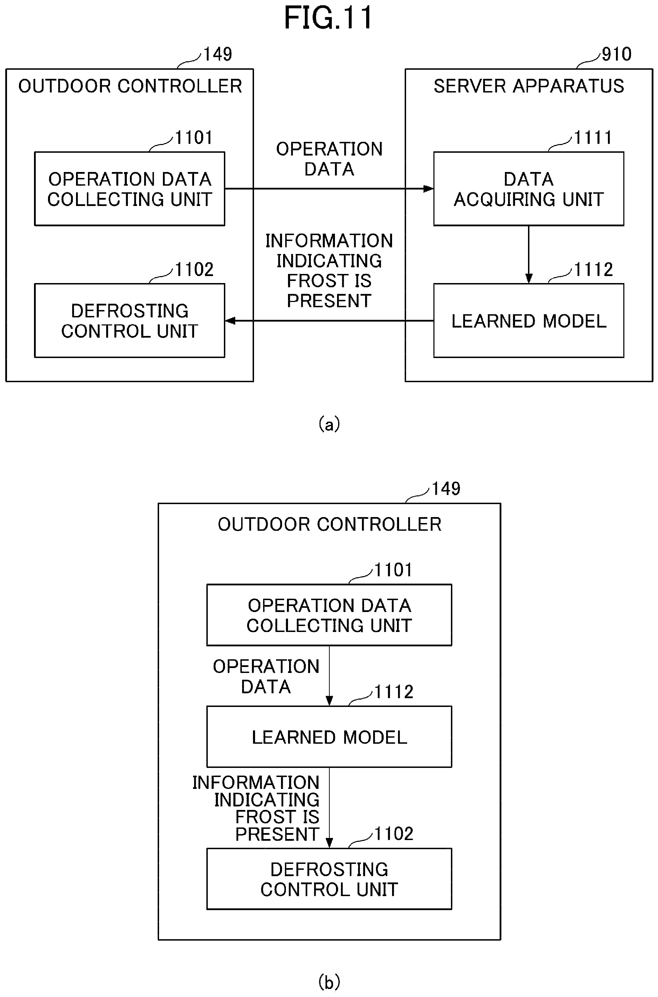

Next, the functional configuration of a system related to prediction processing in the refrigeration system 900 in the prediction phase will be described. FIG. 11 is a diagram illustrating an example of the functional configuration of a system related to prediction processing in the refrigeration system in the prediction phase.

As illustrated in FIG. 11 (a), the outdoor controller 149 functions as the operation data collecting unit 1101 and the defrosting control unit 1102 during the operation of the refrigerator in the prediction phase.

As described above, a prediction program is installed in the server apparatus 910, and when the program is executed, the server apparatus 910 functions as the data acquiring unit 1111 and the learned model 1112 during the operation of the refrigerator.

The operation data collecting unit 1101 collects operation data and transmits it to the server apparatus 910 via the network 920.

The data acquiring unit 1111 acquires operation data from the outdoor controller 149 of the refrigeration system 900. Specifically, the data acquiring unit 1111 acquires, as operation data, the following data representing the state of the refrigerant circuit 140 at each time:
- low pressure side pressure data;
- expansion valve opening data;
- compressor frequency data;
- heating capacity data; and
- evaporation temperature data,
and the following data representing the state of the environment at each time:
- environmental humidity data.

The learned model 1112 predicts the presence or absence of frost formation on the heat exchanger 144 at each time by receiving input of the operation data of each time acquired by the data acquiring unit 1111. When the learned model 1112 predicts the presence of frost formation, the learned model 1112 transmits information indicating frost formation present to the outdoor controller 149.

When the defrosting control unit 1102 receives information indicating frost formation present from the server apparatus 910, the defrosting control unit 1102 controls the heat exchanger 144 functioning as a heat absorber to start a defrosting operation. That is, in the present embodiment, the information indicating frost formation present transmitted from the server apparatus 910 is information indicating the start timing of the defrosting operation for the heat exchanger 144 functioning as a heat absorber.

FIG. 11 (a) illustrates a functional configuration in which the refrigeration system 900 has the server apparatus 910 and a prediction program is installed in the server apparatus 910 so that the control unit of the server apparatus 910 predicts frost formation on the heat exchanger 144.

However, in the refrigeration system 900, the installation destination of the prediction program is not limited to the server apparatus 910; for example, an information processing apparatus may be arranged near the refrigerator and the prediction program may be installed in the information processing apparatus. In this case, the information processing apparatus functions as a prediction apparatus and has the same functional configuration as that of the server apparatus 910 in FIG. 11 (a).

The installation destination of the prediction program may be, for example, the outdoor controller 149, the indoor controller 113, or the indoor controller 123 provided in the refrigerator. In this case, the control unit of the controller as the installation destination functions as the prediction apparatus.

FIG. 11 (b) illustrates the functional configuration of the outdoor controller 149 when the prediction program is installed in the outdoor controller 149. As illustrated in FIG. 11 (b), when the prediction program is executed in the outdoor controller 149, the control unit of the outdoor controller 149 functions as the operation data collecting unit 1101, the learned model 1112, and the defrosting control unit 1102. Details of the functions of the respective units have already been described, and, therefore, a description thereof will be omitted here.

### <Flow of prediction processing>

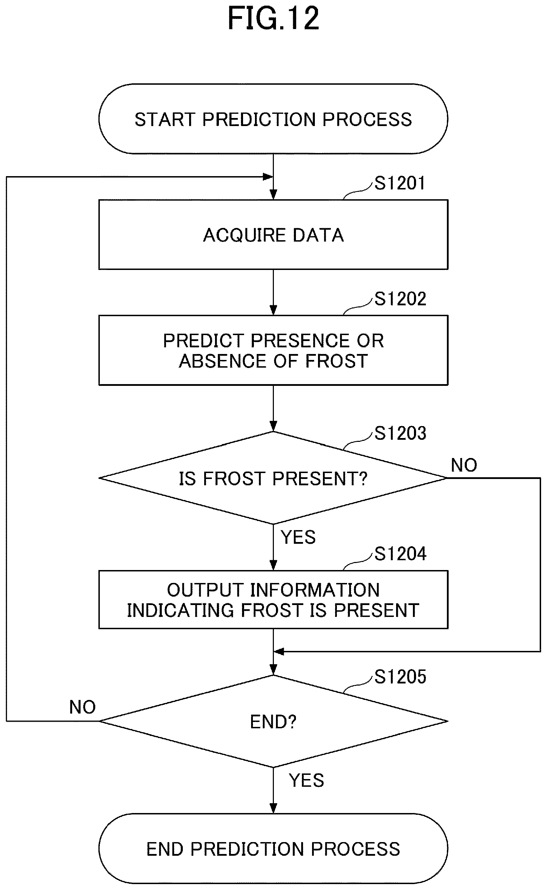

Next, the flow of prediction processing by the server apparatus 910 will be described. FIG. 12 is a flowchart illustrating the flow of prediction processing.

In step S1201, the server apparatus 910 acquires operation data. In step S1202, the server apparatus 910 predicts the presence or absence of frost formation on the heat exchanger 144 based on the acquired operation data, by using the learned model.

In step S1203, the server apparatus 910 determines whether frost formation present is predicted by the learned model. If frost formation present is predicted (YES in step S1203), the process proceeds to step S1204. In step S1204, the server apparatus 910 transmits information indicating frost formation present to the refrigerator.

On the other hand, when it is determined that there is no frost formation (NO in step S1203), the process proceeds to step S1205. In step S1205, the server apparatus 910 determines whether or not to end the prediction process. If it is determined in step S1205 that the prediction processing is to be continued (NO in step S1205), the process returns to step S1201. On the other hand, if it is determined in step S1205 that the prediction processing is to be ended (YES in step S1205), the prediction processing is ended.

### <Specific example of defrosting processing>

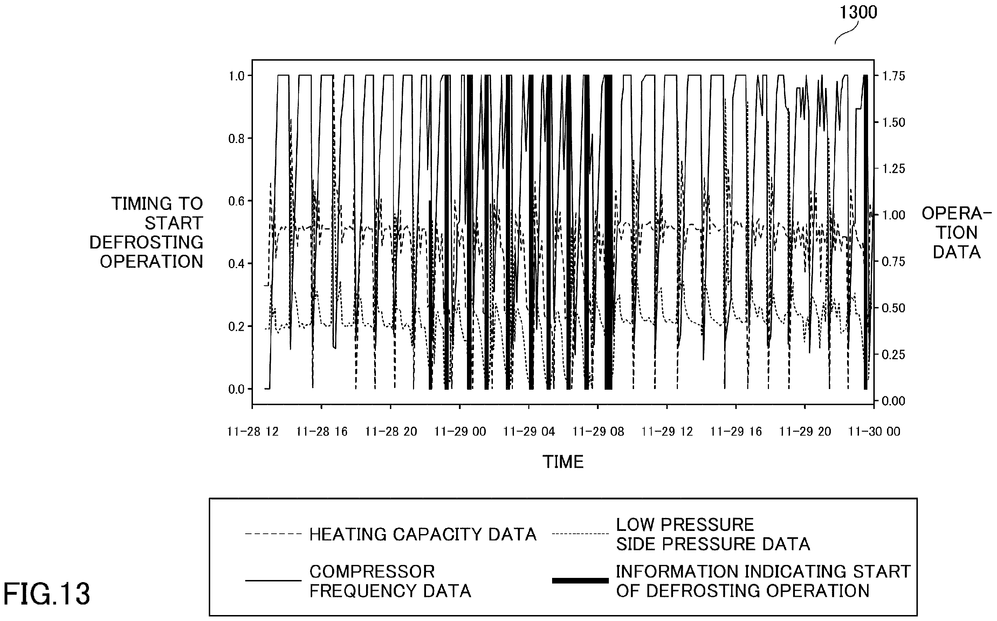

Next, a specific example of defrosting processing by the refrigeration system 900 will be described. FIG. 13 is a diagram illustrating a specific example of defrosting processing.

In FIG. 13, a graph 1300 is a graph in which time is indicated on the horizontal axis, the start timing of the defrosting operation with respect to the heat exchanger 144 functioning as a heat absorber is indicated on the left vertical axis, and operation data is indicated on the right vertical axis. Each line of the graph represents the low pressure side pressure data, compressor frequency data, and heating capacity data. Further, a thick line of the graph represents start timing of the defrosting operation with respect to the heat exchanger 144 functioning as a heat absorber.

As illustrated in FIG. 13, in the case of the refrigeration system 900 according to the present embodiment, the presence or absence of frost formation on the heat exchanger 144 is predicted from the operation data by using the learned model obtained by learning the relationship between the operation data and the presence or absence of frost formation on the heat exchanger 144. In the case of the refrigeration system 900 according to the present embodiment, the defrosting operation is started when frost formation present is predicted. As a result, according to the refrigeration system 900 according to the present embodiment, the defrosting operation can be started only when frost formation has actually occurred, unlike the case where the defrosting operation is started based on the operation data regardless of whether frost formation has actually occurred. As a result, according to the refrigeration system 900 according to the present embodiment, the number of defrosting operations can be reduced.

### <Conclusion>

As is clear from the above description, the refrigeration system according to the first embodiment has the following features.
- A refrigerator having a refrigerant circuit in which a compressor, a radiator, an expansion valve, and a heat absorber are annularly connected and a refrigerant circulates.
- In the learning phase, a learned model is generated based on learning data obtained by classifying the history of past operation data in the refrigerator into a plurality of groups by clustering, and assigning data indicating the presence or absence of frost formation on the heat exchanger to each group.
- In the prediction phase, the current operation data of the refrigerator is input to the learned model, and information indicating the presence or absence of frost formation on the heat exchanger predicted by the learned model is output.

Thus, in the first embodiment, the presence or absence of frost formation on the heat exchanger is predicted from the operation data and output by using the learned model that has learned the relationship between the operation data and the presence or absence of frost formation on the heat exchanger. Thus, according to the first embodiment, it is possible to start the defrosting operation of the heat exchanger functioning as the heat absorber based on the information indicating frost formation present. As a result, according to the first embodiment, it is possible to start the defrosting operation of the refrigerator at a timing corresponding to frost formation.

### [Second embodiment]

In the first embodiment described above, the case of generating one learned model 1112 by using the learning data 700 has been described. However, the learned model to be generated by using the learning data 700 is not limited to one. For example, the learning data 700 may be divided into seasons, and learned models may be generated separately by using the learning data corresponding to each season.

Alternatively, the learning data 700 may be divided for each region (climate) in which the refrigerator is installed, and the learned models may be separately generated by using the learning data corresponding to each region (climate).

In the first embodiment, the server apparatus 910 transmits information indicating frost formation present to the refrigerator when it is determined that frost formation has occurred, and the refrigerator starts the defrosting operation for the heat exchanger functioning as a heat absorber at the timing when the information indicating frost formation present has been received. However, it is not necessary to use the information indicating frost formation present as the information indicating the start timing of defrosting, and the refrigerator may be configured to start defrosting operation after satisfying other conditions, for example. That is, the information indicating frost formation present output by the server apparatus 910 may be widely used as "information to control the start timing when the defrosting operation is initiated for a heat exchanger functioning as a heat absorber", in addition to the information indicating the start timing of the defrosting operation.

In the first embodiment, six types of data are exemplified as the operation data, but the operation data is not limited to these six types of data, and may include at least one of the six types of data. The operation data may include data other than the six types of data. For example, the data indicating the state of the environment in the operation data may include environmental temperature data in addition to environmental humidity data.

In the first embodiment, the case of predicting the presence or absence of frost formation on the heat exchanger 144 (more precisely, the heat transfer fin) of the outdoor unit 130 has been described. However, the object for predicting the presence or absence of frost formation is not limited to the heat exchanger 144 of the outdoor unit 130, and for example, the presence or absence of frost formation on the indoor unit 120 may be predicted. In this case, the refrigeration system 900 may be configured to use the same operation data as in the case of predicting the presence or absence of frost formation on the outdoor unit 130, or may be configured to use different operation data.

In the first embodiment, the learning apparatus and the prediction apparatus have been described as separate apparatuses, but the learning apparatus and the prediction apparatus may be configured as an integrated device. For example, the server apparatus 910, which is an example of the prediction apparatus, may be configured to execute both the learning process and the prediction process. In this case, the control unit of the server apparatus 910 executes both the learning process (see FIG. 3) and the prediction process (see FIG. 11). In addition, for example, the refrigerator, which is an example of the prediction apparatus, may be configured to execute both the learning process and the prediction process. In this case, the control unit of the refrigerator executes both the learning process (see FIG. 3) and the prediction process (see FIG. 11).

Further, in the first embodiment, the learning phase and the prediction phase are described, but the refrigeration system may be further configured to execute a re-learning phase. For example, the refrigeration system may be configured to re-learn the learned model by using the operation data collected in the prediction phase as learning data. When re-learning is performed, the learning apparatus and the prediction apparatus may be arranged as an integrated apparatus, or as separate apparatuses in the refrigeration system.

Further, in the first embodiment, a case where a random forest is used as an example of the learning model is illustrated, but the learning model is not limited to the random forest, and any other learning model for performing supervised learning may be used.

Although the embodiments have been described above, it will be understood that various changes in form and details can be made without departing from the spirit and scope of the claims.

The present international application is based upon and claims priority to Japanese patent application no. 2022-082891 filed on May 20, 2022, the entire contents of which are incorporated herein by reference.

### Reference Signs List

- 100:: refrigerating system
- 110:: indoor unit
- 111:: heat exchanger
- 112:: temperature sensor
- 113:: indoor controller
- 120:: indoor unit
- 121:: heat exchanger
- 122:: temperature sensor
- 123:: indoor controller
- 130:: outdoor unit
- 140:: refrigerant circuit
- 141:: electronic expansion valve
- 144:: heat exchanger
- 144t:: temperature sensor
- 146:: compression mechanism
- 147:: pressure sensor
- 148:: environmental humidity sensor
- 149:: outdoor controller
- 311:: data acquiring unit
- 312:: clustering analysis unit
- 313:: labeling unit
- 314:: learning unit
- 410:: operation data
- 420:: observation data
- 510,: 520: feature space
- 610:: clustering result
- 620:: labeling result
- 700:: learning data
- 900:: refrigeration system
- 910:: server apparatus
- 1101:: operation data collecting unit
- 1102:: defrosting control unit
- 1111:: data acquiring unit
- 1112:: learned model

## Claims

1. A prediction apparatus for outputting information for controlling a start timing of a defrosting operation, in a case where the defrosting operation is started on a heat exchanger functioning as a heat absorber, the defrosting operation being performed by a refrigerator including a refrigerant circuit in which a refrigerant circulates, the refrigerant circuit including a compressor, a radiator, an expansion valve, and the heat absorber that are annularly connected, the prediction apparatus comprising:
a control unit configured to
input operation data of a current time in the refrigerator into a learned model, in a case where the learned model is generated based on learning data obtained by classifying a history of past operation data of the refrigerator into a plurality of groups by clustering and assigning, to each of the plurality of groups, data indicating presence or absence of frost formation on the heat exchanger, and
output information indicating presence or absence of frost formation on the heat exchanger predicted by the learned model.

2. The prediction apparatus according to claim **1,** wherein the operation data includes data indicating a state of the refrigerant circuit.

3. The prediction apparatus according to claim 2, wherein the operation data includes data indicating a state of an environment.

4. The prediction apparatus according to claim 3, wherein
the data indicating the state of the refrigerant circuit includes any one of a frequency of the compressor, pressure data on a low pressure side of the compressor, opening data of the expansion valve, heating capacity data, and evaporation temperature data, and
the data indicating the state of the environment includes environmental humidity data.

5. The prediction apparatus according to claim **1,** wherein the control unit outputs the information indicating the start timing of the defrosting operation as the information indicating presence or absence of frost formation on the heat exchanger when frost formation present is predicted by the learned model.

6. The prediction apparatus according to claim 1, wherein the control unit generates the learning data by classifying the history of the past operation data of the refrigerator into the plurality of groups by clustering and assigning, to each of the plurality of groups, the data indicating the presence or absence of frost formation on the heat exchanger.

7. The prediction apparatus according to claim 1, wherein the control unit inputs, into a learning model, the history of the past operation data classified into the plurality of groups of the learning data, thereby learning the learning model so that output data output from the learning model approaches the data that is assigned to each of the plurality of groups and that indicates presence or absence of frost formation on the heat exchanger, thereby generating the learned model.

8. A refrigeration system comprising:
the refrigerator that controls the start timing of the defrosting operation by using the information indicating presence or absence of frost formation on the heat exchanger output by the prediction apparatus according to any one of claims 1 to 7.

9. The refrigeration system according to claim 8, wherein the prediction apparatus is implemented in any one of a plurality of units included in the refrigerator.

10. The refrigeration system according to claim 8, further comprising:
a server apparatus connected to the refrigerator via a network, wherein
the prediction apparatus is implemented in the server apparatus.

11. A prediction method of a prediction apparatus for outputting information for controlling a start timing of a defrosting operation, in a case where the defrosting operation is started on a heat exchanger functioning as a heat absorber, the defrosting operation being performed by a refrigerator including a refrigerant circuit in which a refrigerant circulates, the refrigerant circuit including a compressor, a radiator, an expansion valve, and the heat absorber that are annularly connected, the prediction method comprising:
a procedure of inputting operation data of a current time in the refrigerator into a learned model, in a case where the learned model is generated based on learning data obtained by classifying a history of past operation data of the refrigerator into a plurality of groups by clustering and assigning, to each of the plurality of groups, data indicating presence or absence of frost formation on the heat exchanger; and
a procedure of outputting information indicating presence or absence of frost formation on the heat exchanger predicted by the learned model.

12. A prediction program that causes a control unit included in a prediction apparatus to execute procedures, the prediction apparatus being for outputting information for controlling a start timing of a defrosting operation, in a case where the defrosting operation is started on a heat exchanger functioning as a heat absorber, the defrosting operation being performed by a refrigerator including a refrigerant circuit in which a refrigerant circulates, the refrigerant circuit including a compressor, a radiator, an expansion valve, and the heat absorber that are annularly connected, the procedures comprising:
a procedure of inputting operation data of a current time in the refrigerator into a learned model, in a case where the learned model is generated based on learning data obtained by classifying a history of past operation data of the refrigerator into a plurality of groups by clustering and assigning, to each of the plurality of groups, data indicating presence or absence of frost formation on the heat exchanger; and
a procedure of outputting information indicating presence or absence of frost formation on the heat exchanger predicted by the learned model.
